Europäisches Patentamt

European Patent Office

Office européen des brevets

(19)

(11) EP 1 030 732 B1

(12) FASCICULE DE BREVET EUROPEEN

(45) Date de publication et mention
de la délivrance du brevet:
26.03.2003 Bulletin 2003/13

(51) Int Cl.7: **B01D 53/94**, B01J 23/34,
B01J 23/10

(21) Numéro de dépôt: 98954545.4

(22) Date de dépôt: 09.11.1998

(86) Numéro de dépôt international:
PCT/FR98/02392

(87) Numéro de publication internationale:
WO 99/024153 (20.05.1999 Gazette 1999/20)

(54) **COMPOSITION A SUPPORT A BASE D'UN OXYDE DE CERIUM, D'UN OXYDE DE ZIRCONIUM ET D'UN OXYDE DE SCANDIUM OU DE TERRE RARE ET UTILISATION POUR LE TRAITEMENT DES GAZ D'ECHAPPEMENT**

ZUSAMMENSETZUNG MIT TRÄGER BESTEHEND AUS CERIUMOXYD, ZIRKONIUMOXYD UND SCANDIUM ODER SELTENE-ERDEN OXYD UND VERWENDUNG FÜR DIE ABGASBEHANDLUNG

COMPOSITION WITH SUPPORT BASED ON A CERIUM OXIDE, A ZIRCONIUM OXIDE AND A SCANDIUM OR RARE EARTH OXIDE AND USE FOR TREATING EXHAUST GAS

(84) Etats contractants désignés:
AT BE DE ES FI FR GB IT SE

(30) Priorité: 10.11.1997 FR 9714083

(43) Date de publication de la demande:
30.08.2000 Bulletin 2000/35

(73) Titulaire: RHODIA CHIMIE
92408 Courbevoie Cédex (FR)

(72) Inventeurs:
• HEDOUIN, Catherine
F-60270 Gouvieux (FR)

• SEGUELONG, Thierry
F-92800 Puteaux (FR)

(74) Mandataire: Dubruc, Philippe
Rhodia Services,
Direction de la Propriété Industrielle,
40, rue de la Haie-Coq
93306 Aubervilliers Cedex (FR)

(56) Documents cités:
EP-A- 0 764 460    FR-A- 2 738 756
US-A- 4 927 799    US-A- 5 075 276

EP 1 030 732 B1

## Description

La présente Invention concerne une composition à support à base d'un oxyde de cérium, d'un oxyde de zirconium et d'un oxyde de scandium ou de terre rare et l'utilisation d'une telle composition pour le traitement des gaz d'échappement.

On sait que la réduction des émissions des oxydes d'azote (NOx) des gaz d'échappement des moteurs d'automobiles notamment, est effectuée à l'aide de catalyseurs "trois voies" qui utilisent stoechiométriquement les gaz réducteurs présents dans le mélange. Tout excès d'oxygène se traduit par une détérioration brutale des performances du catalyseur.

Comme catalyseurs de ce type on connaît ceux décrits dans US 5075276 et US 4927799 qui comprennent un support à base d'oxyde de cérium, de zirconium et de terre rare et une phase catalytique qui peut être du manganèse.

Or, certains moteurs comme les moteurs diesel ou les moteurs essence fonctionnant en mélange pauvre (lean bum) sont économes en carburant mais émettent des gaz d'échappement qui contiennent en permanence un large excès d'oxygène d'au moins 5% par exemple. Un catalyseur trois voies standard est donc sans effet sur les émissions en NOx dans ce cas. Par ailleurs, la limitation des émissions en NOx est rendue impérative par le durcissement des normes en post combustion automobile qui s'étendent maintenant à ces moteurs.

Il existe donc un besoin réel d'un catalyseur efficace pour la réduction des émissions des NOx pour ce type de moteurs et, plus généralement, pour le traitement de gaz contenant des NOx.

Comme type de catalyseurs susceptibles de répondre à ce besoin, on a proposé des systèmes appelés pièges à NOx, qui sont capable d'oxyder NO en $NO_2$ puis d'adsorber le $NO_2$ ainsi formé. Dans certaines conditions, le $NO_2$ est relargué puis réduit en $N_2$ par des espèces réductrices contenues dans les gaz d'échappement. Ces pièges à NOx sont généralement à base de platine. Or, le platine est un élément cher. Il serait donc intéressant de pouvoir disposer d'un système sans platine pour réduire les coûts des catalyseurs.

L'objet de l'invention est donc la mise au point d'une composition qui peut être utilisée comme piège à NOx sans utiliser nécessairement du platine.

Dans ce but, l'invention concerne un procédé de traitement de gaz présentant un excès d'oxygène par rapport à valeur stoechiométrique la teneur en oxygène des gaz étant d'au moins 5% en volume, plus particulièrement d'au moins 10% en vue de la réduction des émissions des oxydes d'azote (NOx) qui est caractérisé en ce qu'on utilise comme piège à NOx une composition qui comprend un support à base d'un oxyde de cérium, d'un oxyde de zirconium et d'un oxyde de scandium ou de terre rare autre que le cérium et une phase supportée à base de manganèse et d'au moins un autre élément choisi parmi les alcalins, les alcalino-terreux et les terres rares.

L'invention concerne aussi une composition comprenant un support à base d'un oxyde de cérium, d'un oxyde de zirconium et d'un oxyde de scandium ou de terre rare autre que le cérium et qui présente une capacité de stockage de l'oxygène à 400°C d'au moins 1,5 ml d'$O_2$/g, plus particulièrement d'au moins 2 ml d'$O_2$/g, et une phase supportée à base de manganèse et d'au moins un autre élément choisi parmi les alcalins, les alcalino-terreux et les terres rares, caractérisée en ce que le support est obtenable par un procédé dans lequel on prépare un mélange en milieu liquide contenant un composé du cérium, un composé de scandium ou de terre rare et une solution de zirconium qui est telle que la quantité de base nécessaire pour atteindre le point équivalent lors d'un dosage acide-base de cette solution vérifie la condition rapport molaire $OH^-/Zr \leq 1,65$; on chauffe ledit mélange; on récupère le précipité obtenu et on calcine ce précipité.

D'autres caractéristiques, détails et avantages de l'invention apparaîtront encore plus complètement à la lecture de la description qui va suivre, ainsi que des divers exemples concrets mais non limitatifs destinés à l'illustrer.

La composition utilisée dans le procédé de l'invention comprend une phase supportée sur un support.

La phase supportée peut plus particulièrement se présenter selon deux variantes.

Selon une première variante, cette phase est à base, outre le manganèse, d'un alcalin et/ou d'un alcalino-terreux. L'alcalin peut être plus particulièrement le sodium ou le potassium. L'alcalino-terreux peut être plus particulièrement le baryum ou le strontium.

Selon une seconde variante, la phase supportée est à base de manganèse et d'au moins un élément choisi parmi les terres rares.

Par terre rare on entend, ici et pour l'ensemble de la description, les éléments du groupe constitué par l'yttrium et les éléments de la classification périodique de numéro atomique compris inclusivement entre 57 et 71.

La terre rare peut être plus particulièrement choisie parmi le lanthane, le cérium, le praséodyme, le néodyme, l'europium, le samarium, le gadolinium ou le terbium. Comme mode de réalisation avantageux dans le cadre de cette seconde variante, on peut mentionner une phase supportée à base de manganèse et de praséodyme.

Enfin, il est tout à fait possible, dans le cadre de la présente invention, d'avoir une phase supportée à base de manganèse et d'au moins deux autres éléments, l'un étant une terre rare, l'autre étant choisi parmi les alcalins et les alcalino-terreux.

Selon un mode de réalisation particulier, la composition de l'invention est susceptible d'être obtenue par un procédé dans lequel au moins un des deux éléments manganèse et potassium est apporté au moins en partie par le permanganate de potassium. Il faut noter qu'un seul élément peut être apporté par le permanganate et seulement en partie. A l'opposé, et d'une manière préférée, il est aussi possible d'apporter les deux éléments totalement par la voie permanganate. Entre ces deux possibilités, toutes les autres variantes sont envisageables. Ce mode de réalisation permet d'obtenir des compositions présentant des capacités élevées d'adsorption des NOx.

Une autre caractéristique importante de la composition de l'invention est la nature du support de la phase supportée.

Comme indiqué plus haut, le support est à base d'un oxyde de cérium, d'un oxyde de zirconium et d'un oxyde de scandium ou de terre rare autre que le cérium. On souligne ici et pour l'ensemble de la description que l'Invention s'applique aussi à tout support à base d'oxyde de cérium, d'oxyde de zirconium et, à titre de troisième élément, d'une combinaison de deux ou plusieurs oxydes choisis parmi l'oxyde de scandium et les oxydes de terres rares.

On utilise de préférence comme supports ceux pour lesquels la proportion atomique cérium/zirconium est d'au moins 1.

Comme terre rare rentrant dans la composition du support, on peut mentionner plus particulièrement le lanthane, le néodyme et le praséodyme.

On peut aussi utiliser plus particulièrement les supports répondant à la formule globale $Ce_xZry M_zO_2$ où M représente au moins un élément choisi dans le groupe comprenant le scandium et les terres rares autres que le cérium et où x, y et z vérifient les relations $0< z \leq 0,3$, $1\leq x/y \leq 19$ et $x+y+z=1$.

Plus particulièrement, x, y et z peuvent vérifier les relations suivantes $0,02\leq z \leq 0,2$, $1\leq x/y \leq 9$, ce dernier rapport pouvant être encore plus particulièrement compris entre 1,5 et 4, ces bornes étant incluses.

Selon un mode de réalisation particulier, le support se présente sous forme d'une solution solide. Dans ce cas, les spectres en diffraction X du support révèlent au sein de ce dernier l'existence d'une seule phase homogène. Pour les supports les plus riches en cérium, cette phase correspond en fait à celle d'un oxyde cérique $CeO_2$ cristallisé et dont les paramètres de mailles sont plus ou moins décalés par rapport à un oxyde cérique pur, traduisant ainsi l'incorporation du zirconium et de l'autre élément (scandium et terres rares autres que le cérium) dans le réseau cristallin de l'oxyde de cérium, et donc l'obtention d'une solution solide vraie.

Selon une variante préférée de l'invention, on utilise des supports qui sont caractérisés par leur surface spécifique à certaines températures ainsi que par leur capacité de stockage de l'oxygène.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Society, 60, 309 (1938)".

Ainsi, on peut utiliser des supports présentant une surface spécifique après calcination 6 heures à 900°C d'au moins $35m^2/g$. Cette surface peut être plus particulièrement d'au moins $40m^2/g$. Elle peut être encore plus particulièrement d'au moins $45m^2/g$.

Ces supports peuvent aussi présenter des surfaces qui restent encore importantes même après calcination 6 heures à 1000°C. Ces surfaces peuvent être d'au moins $14m^2/g$, plus particulièrement d'au moins $20m^2/g$ et encore plus particulièrement d'au moins $30m^2/g$.

Une autre caractéristique des supports de cette variante est leur capacité de stockage de l'oxygène. Cette capacité mesurée à 400°C est d'au moins $1,5ml$ d'$O_2/g$. Elle peut être plus particulièrement d'au moins $1,8ml$ d'$O_2/g$ et encore plus particulièrement d'au moins $2ml$ d'$O_2/g$. Dans les meilleurs cas, cette capacité peut être d'au moins $2,5ml$ d'$O_2/g$. Cette capacité est déterminée par un test qui évalue la capacité du support ou du produit à successivement oxyder des quantités injectées de monoxyde de carbone d'oxygène et à consommer des quantités injectées d'oxygène pour réoxyder le produit. La méthode employée est dite alternée.

Le gaz porteur est de l'hélium pur à un débit de 10l/h. Les injections se font par l'intermédiaire de boucle contenant 16ml de gaz. Les quantités injectées de CO sont effectués en utilisant un mélange gazeux contenant 5% de CO dilué dans l'hélium tandis que les quantités injectées d'$O_2$ se font à partir d'un mélange gazeux contenant 2,5% d'$O_2$ dilué dans l'hélium. L'analyse des gaz est effectuée par chromatographie à l'aide d'un détecteur de conductivité thermique.

La quantité d'oxygène consommée permet de déterminer la capacité de stockage d'oxygène. La valeur caractéristique du pouvoir de stockage d'oxygène est exprimée en ml d'oxygène (dans les conditions normales de température et de pression) par gramme de produit introduit et elle est mesurée à 400°C. Les mesures de capacité de stockage d'oxygène données ici et dans le reste de la description sont faites sur des produits prétraités à 900°C sous air pendant 6 heures dans un four à moufle.

Les supports de la composition de l'invention peuvent être préparés de manière connue. Ils peuvent ainsi être obtenus à partir d'une réaction solide/solide des oxydes ou de tout autre précurseur comme des carbonates. Ils peuvent être aussi préparés par voie humide, c'est à dire par précipitation avec une base des sels de cérium, de zirconium et du ou des troisièmes éléments, puis calcination.

Dans le cas de la variante préférée décrite plus haut et mettant en oeuvre des supports définis par leurs surface spécifiques et leur capacité de stockage de l'oxygène, le support peut être obtenu par un procédé dans lequel on prépare un mélange en milieu liquide contenant un composé du cérium, un composé de scandium ou de terre rare et une solution de zirconium qui est telle que la quantité de base nécessaire pour atteindre le point équivalent lors d'un dosage acide-base de cette solution vérifie la condition rapport molaire OH$^-$/Zr $\leq$1,65; on chauffe ledit mélange; on récupère le précipité obtenu et on calcine ce précipité.

Ce procédé va maintenant être décrit plus précisément.

La première étape de ce procédé consiste à préparer un mélange en milieu liquide, généralement en phase aqueuse, contenant au moins un composé de cérium, au moins un composé de zirconium et un composé de scandium ou de terre rare. Ce mélange est préparé en utilisant une solution de zirconium.

Cette solution de zirconium peut provenir de l'attaque acide d'un réactif comprenant du zirconium. Comme réactif approprié, on peut citer le carbonate, l'hydroxyde ou l'oxyde de zirconium. L'attaque peut être faite avec un acide inorganique comme l'acide nitrique, l'acide chlorhydrique ou l'acide sulfurique. L'acide nitrique est l'acide préféré, et on peut mentionner ainsi tout particulièrement l'utilisation d'un nitrate de zirconyle provenant de l'attaque nitrique d'un carbonate de zirconium. Ce peut être aussi un acide organique tel que l'acide acétique ou l'acide citrique.

Cette solution de zirconium doit présenter la caractéristique suivante. La quantité de base nécessaire pour atteindre le point équivalent lors d'un dosage acide-base de cette solution doit vérifier la condition rapport molaire OH$^-$/Zr $\leq$1,65. Plus particulièrement, ce rapport peut être d'au plus 1,5 et encore plus particulièrement d'au plus 1,3. Généralement, la surface spécifique du produit obtenu a tendance à augmenter lorsque ce rapport décroît.

Le dosage acide-base se fait d'une manière connue. Pour l'effectuer dans des conditions optimales, on peut doser une solution qui a été amenée à une concentration d'environ $3.10^{-2}$ mole par litre exprimée en élément zirconium. On y ajoute sous agitation une solution de soude 1N. Dans ces conditions, la détermination du point équivalent (changement du pH de la solution) se fait d'une manière nette. On exprime ce point équivalent par le rapport molaire OH$^-$/Zr.

A titre de composés du cérium, on peut citer notamment les sels de cérium comme les sels de cérium IV tels que nitrates ou nitrates céri-ammoniacal par exemple, qui conviennent ici particulièrement bien. De préférence, on utilise du nitrate cérique. La solution de sels de cérium IV peut contenir du cérium à l'état céreux mais il est préférable qu'elle contienne au moins 85% de cérium IV. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également utiliser une solution de nitrate cérique obtenue selon le procédé d'oxydation électrolytique d'une solution de nitrate céreux tel que décrit dans le document FR-A- 2 570 087, et qui peut constituer une matière première intéressante.

On notera ici que la solution aqueuse de sels de cérium IV peut présenter une certaine acidité libre initiale, par exemple une normalité variant entre 0,1 et 4 N. Selon la présente invention, il est autant possible de mettre en oeuvre une solution initiale de sels de cérium IV présentant effectivement une certaine acidité libre comme mentionné ci-dessus, qu'une solution qui aura été préalablement neutralisée de façon plus ou moins poussée par ajout d'une base, telle que par exemple une solution d'ammoniaque ou encore d'hydroxydes d'alcalins (sodium, potassium,...), mais de préférence une solution d'ammoniaque, de manière à limiter cette acidité. On peut alors, dans ce dernier cas, définir de manière pratique un taux de neutralisation (r) de la solution initiale de cérium par l'équation suivante :

$$r = \frac{n3 - n2}{n1}$$

dans laquelle n1 représente le nombre total de moles de Ce IV présentes dans la solution après neutralisation; n2 représente le nombre de moles d'ions OH$^-$ effectivement nécessaires pour neutraliser l'acidité libre initiale apportée par la solution aqueuse de sel de cérium IV; et n3 représente le nombre total de moles d'ions OH$^-$ apportées par l'addition de la base. Lorsque la variante "neutralisation" est mise en oeuvre, on utilise dans tous les cas une quantité de base qui doit être impérativement inférieure à la quantité de base qui serait nécessaire pour obtenir la précipitation totale de l'espèce hydroxyde Ce(OH)$_4$ (r=4). Dans la pratique, on se limite ainsi à des taux de neutralisation n'excédant pas 1, et de préférence encore n'excédant pas 0,5.

Les composés de scandium ou de terres rares sont de préférence des composés solubles dans l'eau notamment.

A titre de composés de scandium ou de terres rares utilisables dans le procédé étudié, on peut par exemple citer les sels d'acides inorganiques ou organiques, par exemple du type sulfate, nitrate, chlorure ou acétate. On notera que le nitrate convient particulièrement bien. Ces composés peuvent aussi être apportés sous forme de sols. Ces sols peuvent être obtenus par exemple par neutralisation par une base d'un sel de ces composés.

Les quantités de cérium, de zirconium et de terres rares ou de scandium présentes dans le mélange doivent correspondre aux proportions stoechiométriques requises pour l'obtention d'un support à la composition finale désirée.

Le mélange initial étant ainsi obtenu, on procède ensuite, conformément à la deuxième étape du procédé

EP 1 030 732 B1

étudié, à son chauffage.

La température à laquelle est menée ce traitement thermique, aussi appelé thermohydrolyse, peut être comprise entre 80°C et la température critique du milieu réactionnel en particulier entre 80 et 350°C, de préférence entre 90 et 200°C.

Ce traitement peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), par exemple choisie entre 150 et 350°C, on conduit alors l'opération en introduisant le mélange aqueux contenant les espèces précitées dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar ($10^5$ Pa) et 165 Bar (165. $10^5$ Pa), de préférence entre 5 Bar (5.$10^5$ Pa) et 165 Bar (165. $10^5$ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote.

La durée du traitement n'est pas critique, et peut ainsi varier dans de larges limites, par exemple entre 1 et 48 heures, de préférence entre 2 et 24 heures.

A l'issue de l'étape de chauffage, on récupère un précipité solide qui peut être séparé de son milieu par toute technique classique de séparation solide-liquide telle que par exemple filtration, décantation, essorage ou centrifugation .

Il peut être avantageux d'introduire après l'étape de chauffage, une base telle que par exemple une solution d'ammoniaque, dans le milieu de précipitation. Ceci permet d'augmenter les rendements de récupération en l'espèce précipitée.

Il est aussi possible d'ajouter de la même façon, après l'étape de chauffage, de l'eau oxygénée.

Le produit tel que récupéré peut ensuite être soumis à des lavages à l'eau et/ou à l'ammoniaque, à une température comprise entre la température ambiante et la température d'ébullition. Pour éliminer l'eau résiduelle, le produit lavé peut enfin, éventuellement, être séché, par exemple à l'air, et ceci à une température qui peut varier entre 80 et 300°C, de préférence entre 100 et 150°C, le séchage étant poursuivi jusqu'à l'obtention d'un poids constant.

On notera qu'il est bien entendu possible de répéter une ou plusieurs fois, à l'identique ou non, après récupération du produit et addition éventuelle de la base ou de l'eau oxygénée, une étape de chauffage telle que décrite ci-dessus, en remettant alors le produit en milieu liquide, notamment dans l'eau, et en effectuant par exemple des cycles de traitements thermiques.

Dans une dernière étape du procédé, le précipité récupéré, après éventuellement lavage et/ou séchage, est ensuite calciné. Selon un mode de réalisation particulier, il est possible après le traitement de thermohydrolyse et éventuellement après remise du produit en milieu liquide et un traitement supplémentaire de sécher directement le milieu réactionnel obtenu par atomisation.

La calcination est effectuée à une température comprise généralement entre 200 et 1200°C et de préférence entre 300 et 900°C. Cette température de calcination doit être suffisante pour transformer les précurseurs en oxydes, et elle est aussi choisie en fonction de la température d'utilisation ultérieure du support et en tenant compte du fait que la surface spécifique du produit est d'autant plus faible que la température de calcination mise en oeuvre est plus élevée. La durée de la calcination peut quant à elle varier dans de larges limites, par exemple entre 1 et 24 heures, de préférence entre 4 et 10 heures. La calcination est généralement opérée sous air, mais une calcination menée par exemple sous gaz inerte n'est bien évidemment pas exclue.

Le dépôt de la phase supportée sur le support se fait de manière connue. On peut procéder en utilisant une méthode par imprégnation. On forme ainsi tout d'abord une solution ou une barbotine de sels ou de composés des éléments de la phase supportée.

A titre de sels, on peut choisir les sels d'acides inorganiques comme les nitrates, les sulfates ou les chlorures.

On peut aussi utiliser les sels d'acides organiques et notamment les sels d'acides carboxyliques aliphatiques saturés ou les sels d'acides hydroxycarboxyliques. A titre d'exemples, on peut citer les formiates, acétates, propionates, oxalates ou les citrates.

On imprègne ensuite le support avec la solution ou la barbotine. Après imprégnation, le support est éventuellement séché puis il est calciné. Il est à noter qu'il est possible d'utiliser un support qui n'a pas encore été calciné préalablement à l'imprégnation.

Le dépôt de la phase supportée peut aussi se faire par atomisation d'une suspension à base de sels ou de composés des éléments de la phase supportée et du support.

Il peut être avantageux d'effectuer le dépôt des éléments de la phase supportée en deux étapes. Ainsi, dans le cas de phases supportées à base de manganèse et de potassium et de manganèse et de praséodyme réciproquement, on peut avantageusement déposer le manganèse puis le potassium dans le premier cas et le praséodyme puis le manganèse dans le deuxième cas.

Comme indiqué plus haut, pour le mode de réalisation particulier qui s'applique au cas où la phase supportée comprend du manganèse et du potassium, au moins un des éléments manganèse et potassium peut être apporté, au moins en partie, par le permanganate de potassium.

Il faut noter enfin qu'il est possible dans le cadre de la présente invention qu'au moins un des éléments de la phase supportée soit introduit dans le support lors de la préparation même de celui-ci.

Les teneurs en manganèse, alcalins, alcalino-terreux et terres rares peuvent varier dans de larges proportions. La proportion minimale est celle en deçà de laquelle on n'observe plus d'activité d'adsorption des NOx. Elles peuvent être comprises notamment entre 2 et 50%, plus particulièrement entre 5 et 30%, ces teneurs étant exprimée en % molaire par rapport à la somme des éléments du support et des éléments concernés de la phase supportée.

Les compositions de l'invention telles que décrites plus haut se présentent sous forme de poudres mais elles peuvent éventuellement être mises en forme pour se présenter sous forme de granulés, billes, cylindres ou nids d'abeille de dimensions variables. Les compositions peuvent aussi être utilisées dans des systèmes catalytiques comprenant un revêtement (wash coat) à propriétés catalytiques et à base de ces compositions, sur un substrat du type par exemple monolithe métallique ou en céramique.

L'invention concerne aussi un procédé de traitement de gaz en vue de la réduction des émissions des oxydes d'azote mettant en oeuvre les compositions de l'invention.

Les gaz susceptibles d'être traités par la présente invention sont, par exemple, ceux issus de turbines à gaz, de chaudières de centrales thermiques ou encore de moteurs à combustion interne. Dans ce dernier cas, il peut s'agir notamment de moteurs diesel ou de moteurs fonctionnant en mélange pauvre.

Les compositions de l'invention fonctionnent comme pièges à NOx lorsqu'elles sont mises en contact avec des gaz qui présentent une teneur élevée en oxygène. Par gaz présentant une teneur élevée en oxygène, on entend des gaz présentant un excès d'oxygène par rapport à la quantité nécessaire pour la combustion stoechiométrique des carburants et, plus précisément, des gaz présentant un excès d'oxygène par rapport à la valeur stoechlométrique $\lambda = 1$. La valeur $\lambda$ est corrélée au rapport air/carburant d'une manière connue en soi notamment dans le domaine des moteurs à combustion interne. De tels gaz sont ceux de moteur fonctionnant en mélange pauvre (lean burn) et qui présentent une teneur en oxygène (exprimée en volume) d'au moins 2% ainsi que ceux qui présentent une teneur en oxygène encore plus élevée, par exemple des gaz de moteurs du type diesel, c'est à dire d'au moins 5% ou de plus de 5%, plus particulièrement d'au moins 10%, cette teneur pouvant par exemple se situer entre 5 et 20%.

Les compositions de l'invention peuvent être associées à des systèmes complémentaires de dépollution, comme des catalyseurs trois voies, qui sont efficaces lorsque la valeur de $\lambda$ est inférieure ou égale à 1 dans les gaz, ou encore à des systèmes à injection d'hydrocarbures ou à recyclage des gaz d'échappement (système EGR) pour les diesels. Elles peuvent être aussi associées à des catalyseurs deNOx pour les diesels.

L'invention concerne aussi un système catalytique pour le traitement de gaz en vue de la réduction des émissions des oxydes d'azote, gaz qui peuvent être du type de ceux mentionnés précédemment et tout particulièrement ceux présentant un excès d'oxygène par rapport à la valeur stoechiométrique. Ce système est caractérisé en ce qu'il comprend une composition telle que décrite plus haut.

Des exemples vont maintenant être donnés.

EXEMPLES

- Préparation du support

On utilise un support à base d'oxyde de cérium, d'oxyde de zirconium et d'oxyde de lanthane dans les proportions respectives en poids par rapport aux oxydes de 72/24/4. Cet oxyde est préparé de la manière suivante :

Dans les proportions stoechiométriques requises pour l'obtention de la composition ci-dessus, on mélange une solution de nitrate cérique préneutralisée par ajout de $NH_4OH$ tel que r=- 0,22 (r étant tel que défini précédemment), une solution de nitrate de lanthane et une solution de nitrate de zirconyle qui répond, au sens défini plus haut, à la condition rapport molaire $OH^-/Zr = 1,17$.

La concentration de ce mélange (exprimée en oxyde des différents éléments) est ajustée à 80 g/l. Ce mélange est ensuite porté à 150°C pendant 4 heures.

Une solution d'ammoniaque est ensuite ajoutée au milieu réactionnel de telle sorte que le pH soit supérieur à 8,5. Le milieu réactionnel ainsi obtenu est porté à ébullition pendant 2 heures. Après décantation puis soutirage, on remet en suspension le produit solide et le milieu ainsi obtenu est traité pendant 1 heure à 100°C. Le produit est ensuite filtré. Le produit destiné à l'utilisation comme support pour la suite des exemples est calciné à la température de 550°C pendant 2 heures.

Il est à noter que le produit calciné à 900°C, 6 heures présente une surface spécifique de 51m²/g. Sa capacité de stockage de l'oxygène mesurée dans les conditions données plus haut est de 2,8ml d'$O_2$/g.

- Préparation du catalyseur

Matières premières:

On utilise du nitrate de manganèse $Mn(NO_3)_2$, du nitrate de praséodyme $Pr(NO_3)_3$, du nitrate de potassium $KNO_3$, du permanganate de potassium $KMnO_4$ et de l'acétate de baryum $Ba(C_2H_3O_2)_2$.

Eléments de la phase supportée, teneur et dépôt :

On procède en deux étapes pour le dépôt.

1$^{ère}$ étape : Dépôt du premier élément actif

Cette étape consiste à déposer l'élément actif dans une quantité variant entre 5 et 10% molaire dans la cas de Mn et de 15% molaire dans le cas de Ba et Pr et calculée de la manière suivante :

$$[X]/( [X] + [CeO_2]+[ZrO_2]+[La_2O_3] )= 0,05 \text{ ou } 0,1$$

avec X= Mn

$$[X]/( [X] + [CeO_2]+[ZrO_2]+[La_2O_3] )= 0,15$$

avec X= Pr, Ba

2$^{ième}$ étape : Dépôt du second élément actif:

Cette étape consiste à déposer le deuxième élément actif dans une quantité variant entre 15 et 20% molaire dans le cas de K et 5% molaire dans le cas de Mn et calculée de la manière suivante :

$$[Y]/( [X] + [Y] + [CeO_2]+[ZrO_2]+[La_2O_3] )= 0,15 \text{ ou } 0,2$$

avec Y= K

$$[Y]/( [X] + [Y] + [CeO_2]+[ZrO_2]+[La_2O_3] )= 0,05$$

avec Y= Mn

Dans le cas où on utilise comme précurseur le permanganate de potassium (KMnO4) le dépôt est effectué en une seule fois. Le nombre de moles déposé est égal à 13,6% calculé de la manière suivante :

$$[X]/( [X] + [CeO_2]+[ZrO_2]+[La_2O_3] )= 0,136$$

avec X= $KMnO_4$

Deux méthodes de dépôt sont utilisées : l'imprégnation à sec pour l'exemple 1 et dans les autres cas l'atomisation au Buchi®.

Imprégnation à sec:

Elle consiste à imprégner le support considéré avec l'élément de la phase supportée dissout dans une solution de volume égal au volume poreux du support (déterminé à l'eau : 0.5 $cm^3$/g) et de concentration permettant d'atteindre la concentration recherchée.

Dans le cas présent les éléments sont imprégnés sur le support l'un à la suite de l'autre.

Le protocole opératoire est le suivant :

- Imprégnation à sec du premier élément
- Séchage à l'étuve (110°C, 2H)
- Calcination 2h 600°C (5°C/min)
- Imprégnation à sec du deuxième élément
- Séchage à l'étuve (110°C, 2H)
- Calcination 2h 600°C (5°C/min)

Atomisation au Buchi® :

On prépare une suspension contenant l'élément à déposer et le support (C=150 g/l). La suspension est ensuite atomisée au Buchi®. Le solide séché est calciné 2 heures à 600°C (vitesse de montée 5°C/min).
On réitère l'opération avec le deuxième élément à déposer.
Les températures d'entrée et de sortie du Buchi® sont respectivement égales à 210°C et 120°C.

- Test catalytique

Le test catalytique est réalisé de la manière suivante :
On charge 0,15 g du piège à NOx en poudre dans un réacteur en quartz. La poudre utilisée a préalablement été compactée puis broyée et tamisée de manière à isoler la tranche granulométrique comprise entre 0,125 et 0,250 mm.
Le mélange réactionnel à l'entrée du réacteur a la composition suivante (en volume):

- NO : 300 vpm
- $O_2$ : 10 %
- $CO_2$ : 10 %
- $H_2O$ : 10 %
- $N_2$ : qsp 100 %

Le débit global est de 30 Nl/h.
La WH est de l'ordre de 150.000 $h^{-1}$.
Les signaux de NO et NOx (NOx = NO + $NO_2$) sont enregistrés en permanence, ainsi que la température dans le réacteur.
Les signaux de NO et NOx sont donnés par un analyseur de NOx ECOPHYSICS, basé sur le principe de la chimiluminescence.
L'évaluation des pièges à NOx comporte deux parties:

· tout d'abord, on détermine la température d'adsorption maximale Tmax, en adsorbant les NOx à 125 °C pendant 15 minutes, et en chauffant ensuite sous le même mélange à 600 °C. Le profil des NOx montre un maximum d'adsorption à une certaine température appelée Tmax.
· dans un deuxième temps, on détermine la quantité adsorbée (en nombre de moles de NO) en isotherme à la température d'adsorption maximale.

La quantité est calculée par intégration.

- Résultats

Les résultats sont donnés dans le tableau ci-dessous:

| Exemple | Composition de la phase supportée (% molaire) | Surface BET $m^2/g$ | Quantité adsorbée ($10^{-4}$ mol NO) | Tmax °C |
|---------|-----------------------------------------------|---------------------|--------------------------------------|---------|
| 1 | Mn 5%, K 15% | 47 | 7,7 | 305 |
| 2 | Ba 15%, Mn 5% | 67 | 6,2 | 275 |
| 3 | Mn 5%, K 20% | 33 | 10 | 325 |

(suite)

| Exemple | Composition de la phase supportée (% molaire) | Surface BET $m^2/g$ | Quantité adsorbée ($10^{-4}$mol NO) | Tmax °C |
|---|---|---|---|---|
| 4 | Mn 10%, K 15% | 49 | 10,3 | 295 |
| 5 | Mn 13,6%, K 13,6% | 49 | 12,1 | 300 |
| 6 | Pr 15%, Mn 5% | 77 | 5,2 | 270 |

On peut remarquer que la Tmax peut être égale ou supérieure à 300°C pour certaines compositions.


**Revendications**

1. Procédé de traitement de gaz présentant un excès d'oxygène par rapport à la valeur stoechiométrique, la teneur en oxygène des gaz étant d'au moins 5% en volume, plus particulièrement d'au moins 10%, en vue de la réduction des émissions des oxydes d'azote (NOx), **caractérisé en ce qu'**on utilise comme piège à NOx une composition qui comprend un support à base d'un oxyde de cérium, d'un oxyde de zirconium et d'un oxyde de scandium ou de terre rare autre que le cérium et une phase supportée à base de manganèse et d'au moins un autre élément choisi parmi les alcalins, les alcalino-terreux et les terres rares.

2. Procédé selon la revendication 1, **caractérisé en ce qu'**on utilise une composition dans laquelle l'autre élément précité est choisi parmi les alcalins et les alcalino-terreux, l'alcalin pouvant être plus particulièrement le potassium, l'alcalino-terreux pouvant être plus particulièrement le baryum.

3. Procédé selon la revendication 1, **caractérisé en ce qu'**on utilise une composition dans laquelle l'autre élément précité est choisi parmi les terres rares.

4. Procédé selon la revendication 1 ou 3, **caractérisé en ce qu'**on utilise une composition dans laquelle la phase supportée est à base de manganèse et de praséodyme.

5. Procédé selon l'une des revendications précédentes, **caractérisé en ce qu'**on utilise une composition dans laquelle la proportion atomique cérium/zirconium dans le support est d'au moins 1.

6. Procédé selon l'une des revendications précédentes, **caractérisé en ce qu'**on utilise une composition dans laquelle le support présente une surface spécifique après calcination 6 heures à 900°C d'au moins $35m^2/g$, plus particulièrement d'au moins $40m^2/g$.

7. Procédé selon l'une des revendications précédentes, **caractérisé en ce qu'**on utilise une composition dans laquelle le support présente une capacité de stockage de l'oxygène à 400°C d'au moins 1,5ml d'$O_2$/g, plus particulièrement d'au moins 2ml d'$O_2$/g.

8. Procédé selon l'une des revendications précédentes, **caractérisé en ce qu'**on utilise une composition dans laquelle le support répond à la formule $Ce_xZr_yM_zO_2$ où M représente au moins un élément choisi dans le groupe comprenant le scandium et les terres rares autres que le cérium et où $0< z \leq 0,3$ et plus particulièrement $0,02\leq z \leq 0,2$, et $1\leq x/y \leq 19$ et plus particulièrement $1\leq x/y \leq 9$, et x, y et z étant liés par la relation x+y+z=1.

9. Procédé selon l'une des revendications précédentes, **caractérisé en ce qu'**on utilise une composition dans laquelle le support se présente sous forme d'une solution solide.

10. Procédé selon l'une des revendications précédentes, **caractérisé en ce qu'**on utilise une composition dans laquelle la terre rare entrant dans la composition du support est le lanthane, le néodyme ou le praséodyme.

11. Procédé selon l'une des revendications précédentes, **caractérisé en ce qu'**on utilise une composition dans laquelle le support est obtenu par un procédé dans lequel on prépare un mélange en milieu liquide contenant un composé du cérium, un composé de scandium ou de terre rare et une solution de zirconium qui est telle que la quantité de base nécessaire pour atteindre le point équivalent lors d'un dosage acide-base de cette solution vérifie la condition rapport molaire OH⁻/Zr ≤1,65; on chauffe ledit mélange; on récupère le précipité obtenu et on calcine ce précipité.

**12.** Procédé selon l'une des revendications précédentes, **caractérisé en ce qu'**on utilise une composition dans laquelle la phase catalytique comprend du manganèse et du potassium et qui est obtenue par un procédé dans lequel au moins un des deux éléments manganèse et potassium est apporté au moins en partie par le permanganate de potassium.

**13.** Procédé selon l'une des revendications précédentes, **caractérisé en ce qu'**on traite un gaz d'échappement de moteurs à combustion interne, notamment de moteurs diesel ou de moteurs fonctionnant en mélange pauvre.

**14.** Composition comprenant un support à base d'un oxyde de cérium, d'un oxyde de zirconium et d'un oxyde de scandium ou de terre rare autre que le cérium et qui présente une capacité de stockage de l'oxygène à 400°C d'au moins 1,5ml d'O$_2$/g, plus particulièrement d'au moins 2ml d'O$_2$/g, et comprenant une phase supportée à base de manganèse et d'au moins un autre élément choisi parmi les alcalins, les alcalino-terreux et les terres rares, **caractérisée en ce que** le support est obtenable par un procédé dans lequel on prépare un mélange en milieu liquide contenant un composé du cérium, un composé de scandium ou de terre rare et une solution de zirconium qui est telle que la quantité de base nécessaire pour atteindre le point équivalent lors d'un dosage acide-base de cette solution vérifie la condition rapport molaire OH⁻/Zr ≤1,65 on chauffe ledit mélange; on récupère le précipité obtenu et on calcine ce précipité.

**15.** Composition selon la revendication 14, **caractérisée en ce que** l'autre élément précité de la phase supportée est choisi parmi les alcalins et les alcalino-terreux, l'alcalin pouvant être plus particulièrement le potassium, l'alcalino-terreux pouvant être plus particulièrement le baryum.

**16.** Composition selon la revendication 14, **caractérisée en ce que** la phase supportée est à base de manganèse et de praséodyme.

**17.** Composition selon lune des revendications 14 à 16, **caractérisée en ce que** le support répond à la formule Ce$_x$Zr$_y$M$_z$O$_2$ où M représente au moins un élément choisi dans le groupe comprenant le scandium et les terres rares autres que le cérium et où 0< z ≤0,3 et plus particulièrement 0,02≤ z ≤0,2, et 1≤ x/y ≤19 et plus particulièrement 1≤ x/y ≤9, et x, y et z étant liés par la relation x+y+z=1.

**Claims**

**1.** A process for treating gases having an excess of oxygen with respect to the stoichiometric value, the amount of oxygen in the gases being at least 5% by volume, more particularly at least 10%, for reducing the emissions of nitrogen oxides (Nox), **characterised by** using as an Nox trap a composition which comprises a support based on a cerium oxide, a zirconium oxide and a scandium oxide or rare earth other than cerium and a supported phase based on manganese and at least one other element selected from alkali metals, alkaline earth metals and rare earths.

**2.** A process according to claim 1 **characterised by** using a composition in which said other element is selected from alkali metals and alkaline earth metals, wherein the alkali metal can be more particularly potassium and the alkaline earth metal can be more particularly barium.

**3.** A process according to claim 1 **characterised by** using a composition in which said other element is selected from rare earths.

**4.** A process according to claim 1 or claim 3 **characterised by** using a composition in which the supported phase is based on manganese and praseodymium.

**5.** A process according to one of the preceding claims **characterised by** using a composition in which the cerium/zirconium atomic proportion in the support is at least 1.

**6.** A process according to one of the preceding claims **characterised by** using a composition in which the support has a specific surface area after calcination for 6 hours at 900°C of at least 35 m$^2$/g, more particularly at least 40

m$^2$/g.

7. A process according to one of the preceding claims **characterised by** using a composition in which the support has an oxygen storage capacity at 400°C of at least 1.5 ml of O$_2$/g, more particularly at least 2 ml of O$_2$/g.

8. A process according to one of the preceding claims **characterised by** using a composition in which the support corresponds to the formula Ce$_x$Zr$_y$M$_z$O$_2$ in which M represents at least one element selected from the group comprising scandium and rare earths other than cerium and in which O<z≤0.3 and more particularly 0.02≤z≤0.2 and 1≤x/y≤19 and more particularly 1≤x/y≤9 and x,y and z being linked by the relationship x+y+z=1.

9. A process according to one of the preceding claims **characterised by** using a composition in which the support is in the form of a solid solution.

10. A process according to one of the preceding claims **characterised by** using a composition in which the rare earth involved in the composition of the support is lanthanum, neodymium or praseodymium.

11. A process according to one of the preceding claims **characterised by** using a composition in which the support is obtained by a process comprising preparing a mixture in liquid medium containing a compound of cerium, a compound of scandium or rare earth and a solution of zirconium which is such that the amount of base necessary to attain the equivalent point upon acid-base determination of that solution verifies the condition of a molar ratio OH$^-$/Zr≤1.65; heating said mixture; recovering the precipitate obtained and calcining said precipitate.

12. A process according to one of the preceding claims **characterised by** using a composition in which the catalytic phase comprises manganese and potassium and which is obtained by a process in which at least one of the two elements manganese and potassium is at least in part provided by potassium permanganate.

13. A process according to one of the preceding claims **characterised by** treating an exhaust gas from internal combustion engines, in particular diesel engines or lean-burn engines.

14. A composition comprising a support based on a cerium oxide, a zirconium oxide and a scandium oxide or rare earth other than cerium and which has an oxygen storage capacity at 400°C of at least 1.5 ml of O$_2$/g, more particularly at least 2 ml of O$_2$/g, and comprising a supported phase based on manganese and at least one other element selected from alkali metals, alkaline earth metals and rare earths, **characterised in that** the support can be obtained by a process comprising preparing a mixture in liquid medium containing a compound of cerium, a compound of scandium or rare earth and a solution of zirconium which is such that the amount of base necessary to attain the equivalent point upon acid-base determination of that solution verifies the condition of a molar ratio OH$^-$/Zr≤1.65; heating said mixture; recovering the precipitate obtained and calcining said precipitate.

15. A composition according to claim 14 **characterised in that** said other element of the supported phase is selected from alkali metals and alkaline earth metals, wherein the alkali metal can be more particularly potassium and the alkaline earth metal can be more particularly barium.

16. A composition according to claim 14 **characterised in that** the supported phase is based on manganese and praseodymium.

17. A composition according to one of claims 14 to 16 **characterised in that** the support corresponds to the formula Ce$_x$Zr$_y$M$_z$O$_2$ in which M represents at least one element selected from the group comprising scandium and rare earths other than cerium and in which O<z≤0.3 and more particularly 0.02≤z≤0.2 and 1≤x/y≤19 and more particularly 1≤x/y≤9 and x,y and z being linked by the relationship x+y+z=1.

**Patentansprüche**

1. Verfahren zur Behandlung von Gas im Hinblick auf die Reduzierung der Emission von Stickoxiden (NOx), wobei das Gas in bezug auf den stöchiometrischen Wert einen Überschuß von Sauerstoff aufweist und der Gehalt an Sauerstoff mindestens 5 Vol.-%, insbesondere mindestens 10 Vol.-% beträgt, **dadurch gekennzeichnet, daß** man als Falle für NOx eine Zusammensetzung verwendet, die einen Träger auf der Basis eines Oxides von Cerium, eines Oxides von zirkonium und eines Oxides von Scandium oder einer Seltenen Erde außer Cerium und eine Trägerphase auf der Basis von Mangan und mindestens einem anderen Element umfaßt, ausgewählt unter den Alkalien, den Erdalkalien und den Seltenen Erden.

2. Verfahren nach Anspruch 1, **dadurch gekennzeichnet, daß**.man eine Zusammensetzung verwendet, in der das vorstehend genannte andere Element unter den Alkalien und den Erdalkalien ausgewählt wird, wobei das Alkali ganz besonders Kalium und das Erdalkali ganz besonders Barium sein können.

3. Verfahren nach Anspruch 1, **dadurch gekennzeichnet, daß** man eine Zusammensetzung verwendet, in der das vorstehend genannte andere Element unter den Seltenen Erden ausgewählt wird.

4. Verfahren nach Anspruch 1 oder 3, **dadurch gekennzeichnet, daß** man eine Zusammensetzung verwendet, in der die Trägerphase auf der Basis von Mangan und Praseodym besteht.

5. Verfahren nach einem der vorstehenden Ansprüche, **dadurch gekennzeichnet, daß** man eine Zusammensetzung verwendet, in der das Atomverhältnis Cerium/Zirkonium in dem Träger mindestens 1 beträgt.

6. Verfahren nach einem der vorstehenden Ansprüche, **dadurch gekennzeichnet, daß** man eine Zusammensetzung verwendet, in der der Träger eine spezifische Oberfläche nach der Kalzinierung während 6 Stunden bei 900 °C von mindestens 35 $m^2$/g und ganz besonders von mindestens 40 $m^2$/g aufweist.

7. Verfahren nach einem der vorstehenden Ansprüche, **dadurch gekennzeichnet, daß** man eine Zusammensetzung verwendet, in der der Träger eine Speicherkapazität von Sauerstoff bei 400 °C von mindestens 1,5 ml $O_2$/g und ganz besonders von mindestens 2 ml $O_2$/g aufweist.

8. Verfahren nach einem der vorstehenden Ansprüche, **dadurch gekennzeichnet, daß** man eine Zusammensetzung verwendet, in der der Träger der Formel $Ce_xZr_yM_zO_2$ entspricht, worin M mindestens ein Element darstellt, gewählt aus der Scandium und die Seltenen Erden außer Cerium umfassenden Gruppe, und worin $0 < z \leq 0,3$, ganz besonders $0,02 \leq z \leq 0,2$ beträgt, und $1 \leq x/y \leq 19$, ganz besonders $1 \leq x/y \leq 9$ beträgt, und x, y und z durch die Beziehung x + y + z = 1 verbunden sind.

9. Verfahren nach einem der vorstehenden Ansprüche, **dadurch gekennzeichnet, daß** man eine Zusammensetzung verwendet, in der der Träger in Form einer festen Lösung vorliegt.

10. Verfahren nach einem der vorstehenden Ansprüche, **dadurch gekennzeichnet, daß** man eine Zusammensetzung verwendet, in der *die* Seltene Erde, die in die Zusammensetzung des Trägers eintritt, Lanthan, Neodym oder Praseodym ist.

11. Verfahren nach einem der vorstehenden Ansprüche, **dadurch gekennzeichnet, daß** man eine Zusammensetzung verwendet, in der der Träger durch ein Verfahren erhalten wird, bei dem man eine Mischung im flüssigen Medium herstellt, die eine Verbindung von Cerium, eine Verbindung von Scandium oder der Seltenen Erde und eine Lösung von Zirkonium enthält, die so beschaffen ist, daß die Menge an Base, die notwendig ist, um den Äquivalenzpunkt bei einer Bestimmung Säure-Base dieser Lösung zu erreichen, die Bedingung des molaren Verhältnisses $OH^-$/Zr $\leq 1,65$ erfüllt, und man die genannte Mischung erhitzt, den erhaltenen Niederschlag gewinnt und diesen Niederschlag kalziniert.

12. Verfahren nach einem der vorstehenden Ansprüche, **dadurch gekennzeichnet, daß** man eine Zusammensetzung verwendet, in der die katalycische Phase Mangan und Kalium umfaßt, und die durch ein Verfahren erhalten wird, bei dem mindestens eines der zwei Elemente Mangan und Kalium mindestens teilweise durch Kaliumpermanganat eingebracht wird.

13. Verfahren nach einem der vorstehenden Ansprüche, **dadurch gekennzeichnet, daß** man ein Auspuffgas von Motoren mit innerer Verbrennung, insbesondere von Dieselmotoren, oder von Motoren, die mit magerer Mischung arbeiten, behandelt.

14. Zusammensetzung, umfassend einen Träger auf der Basis eines Oxides von Cerium, eines Oxides von Zirkonium und eines Oxides von Scandium oder einer Seltenen Erde außer Cerium, die eine Speicherkapazität von Sauerstoff bei 400 °C von mindestens 1,5 ml $O_2$/g und ganz besonders von mindestens 2 ml $O_2$/g aufweist, und die eine Trägerphase auf der Basis von Mangan und mindestens einem anderen Element umfaßt, ausgewählt unter den Alkalien, den Erdalkalien und den Seltenen Erden, **dadurch gekennzeichnet, daß** der Träger durch ein verfahren erhalten werden kann, bei dem man eine Mischung im flüssigen Medium herstellt, die eine Verbindung von Cerium, eine Verbindung von Scandium oder der Seltenen Erde und elne Lösung von Zirkonium enthält, die so beschaffen ist, daß die Menge an Base, die notwendig ist, um den Äquivalenzpunkt bei einer Bestimmung Säure-Base dieser Lösung zu erreichen, die Bedirigung des molaren Verhältnisses OH/Zr $\leq$ 1,65 erfüllt, und man die genannte Mischung erhitzt, den erhaltenen Miederschlag gewinnt und diesen Niederschlag kalziniert.

15. Zusammensetzung nach Anspruch 14, **dadurch gekennzeichnet, daß** das vorstehend genannte andere Element der Trägerphase unter den Alkalien und den Erdalkalien ausgewählt wird, wobei das Alkali ganz besonders Kalium und das Erdalkali ganz besonders Barium sein können.

16. Zusammensetzung nach Anspruch 14, **dadurch gekennzeichnet, daß** die Trägerphase auf der Basis von Mangan und Praseodym besteht.

17. Zusammensetzung nach einem der Ansprüche 14 bis 16, **dadurch gekennzeichnet, daß** der Träger der Formel $Ce_xZr_yM_2O_2$ entspricht, worin M mindestens ein Element darstellt, gewählt aus der Scandium und die Seltenen Erden außer Cerium umfassenden Gruppe, und worin $0 < z \leq 0,3$, ganz besonders $0,02 \leq z \leq 0,2$ beträgt, und $1 \leq x/y \leq 19$, ganz besonders $1 \leq x/y \leq 9$ beträgt, und x, y und z durch die Beziehung x + y + z = 1 verbunden sind.